# EUROPEAN PATENT APPLICATION

(11) **EP 3 747 266 A1**
(43) Date of publication of application: **09.12.2020**
(21) Application number: 20178391.7
(22) Date of filing: 04.06.2020
(51) Int. Cl.: A01N 43/58, A01N 59/16, A01N 59/20, A01P 13/00, A01P 21/00

(54) **COMPOSITIONS OF DICARBOXYLIC ACID DERIVATIVES**

(30) Priority: 05.06.2019 IN 201911022317
(71) Applicant: UPL Corporation Limited, Port Louis (MU)
(72) Inventor: PIROTTE, Alan, Bruno, Port Louis (MU)
(74) Representative: HGF

(57) **Abstract**

The present invention relates to a composition of dicarboxylic acid hydrazides.

## Description

### TECHNICAL FIELD

The present invention relates to a composition of dicarboxylic acid hydrazides. The present invention also relates to process of preparing the composition of dicarboxylic acid hydrazides.

### BACKGROUND

Hydrazides find wide applications as drugs, chemical preservers for plants, for manufacturing polymers, glues, etc., in industry, and for many other purposes. Maleic hydrazide (MH) is a well-known synthetic compound which has a plant growth regulating action. It is used as a foliar treatment of potatoes to prevent volunteer formation and sprouting during storage. It is also used to control sprouting of onions, suckers in tobacco, and growth of weeds, grasses and trees in/along lawns, turf, ornamental plants, non-bearing citrus, utility and highway rights-of-way, airports and industrial land.

Hydrazine is a raw material used to manufacture maleic hydrazide and is considered as a toxic impurity in the final technical with very low admissible levels. Hydrazine is a highly toxic, dangerously unstable compound also known for its carcinogenic properties.

Maleic hydrazide degrades over the time and liberates free hydrazine during its storage. With passing time, it is found that the levels of hydrazine increase in the product.

Various methods that are used while formulating maleic hydrazide such as neutralization with potassium salts, drying steps while preparing granules and addition of chelating agents to liquid compositions of maleic hydrazide tend to increase the levels of free hydrazine in the product. In such cases, it is a challenge to stick to the prescribed specification even if the raw materials used adhere to the prescribed specifications. Measures used to correct this anomaly have resulted in less stable compositions with problems like crystallization in liquid composition plaguing the manufacturers.

Thus, considering these challenges, there is a pressing need for a composition that stays stable over a significant period. The present inventors address this need and provide a composition of dicarboxylic acid hydrazides.

Thus, it is the object of the present invention to provide a composition of dicarboxylic acid hydrazides which is storage stable.

### SUMMARY OF THE INVENTION

In accordance with the above objective, the present invention provides a composition comprising:
a. at least one compound selected from a dicarboxylic acid hydrazide, and
b. at least one transition metal ion or a salt thereof.

In another aspect, the present invention provides a composition which is substantially free of hydrazine having hydrazine levels less than 1 ppm.

In another aspect, the present invention provides a method of preparing a low toxic composition.

In yet another aspect, the present invention provides the use of transition metal ions for controlling or lowering free hydrazine levels in compositions comprising at least one compound selected from dicarboxylic acid hydrazides.

In another aspect, present invention provides a method of treating a plant at a locus by applying a composition comprising:
a. at least one compound selected from a dicarboxylic acid hydrazide; and
b. at least one transition metal ion or a salt thereof.

### DETAILED DESCRIPTION

Dicarboxylic acid hydrazides are commonly used in agriculture as plant growth regulators, foliar applications, anti-sprouting agents and so on. They also find applications in the resin industry as hardeners, cross-linkers, etc.

Over a period during storage, the hydrazides degrade to release hydrazine which contributes as an impurity into the final product. As a result, it contributes to potential toxicity and harm to consumers as well as lowers the potency of the product in desired action leading to overall cost ineffectiveness. Certain processes for preparing the composition also contribute to a significant increase in hydrazine levels in the final product pushing it out of prescribed specification.

Surprisingly, the inventors of the present invention found that addition of transition metal ions or a salt thereof to the composition alleviates amount of hydrazine in the composition. Thus, the inventors of the present invention were able to provide a composition of dicarboxylic acid hydrazide with low levels of hydrazine well under the limit of 1 ppm.

As used herein, the term "dicarboxylic acid hydrazide" encompass any hydrazide salt of dicarboxylic acids described in the present invention. These include any dicarboxylic acid selected from, but not limited to, maleic acid, citric acid, oxalic acid, succinic acid, malonic acid, adipic acid, phthalic acid, terephthalic acid, and combinations thereof.

As used herein, the term "transition metal ion" refers to ions of metal elements described in the periodic table in the list of "transition metals" and having a positive valency state. The metal ions are selected from, but not limited to, copper, iron, zinc, cobalt, nickel, silver, vanadium, chromium, manganese, mercury, scandium, titanium, tungsten, cadmium, platinum, rhodium, palladium, molybdenum, osmium, ruthenium, zirconium, gold or combinations thereof. The valency state can range from +1 to +n, wherein "n" indicates infinity.

As used herein, the term "hydrazine levels" or "levels of hydrazine" refers to hydrazine content quantified by standard method of GCMS.

The term "agriculturally acceptable amount" refers to an amount of an active that kills or inhibits the plant disease/ condition for which control is desired, in an amount not significantly toxic to the plant being treated.

Thus, in an embodiment the present invention provides a composition comprising:
a) at least one compound selected from dicarboxylic acid hydrazide; and
b) at least one transition metal ion or a salt thereof.

According to a preferred embodiment, the dicarboxylic acid is maleic acid and the hydrazide of maleic acid is maleic hydrazide.

In an embodiment, the preferred transition metal ions are copper, iron, nickel, or combinations thereof. More specifically, the preferred transition metal ions are Cu²⁺, Cu³⁺, Fe²⁺, Fe³⁺, Ni²⁺, Ni³⁺ or combinations thereof.

Another embodiment of the present invention provides a composition comprising maleic hydrazide and at least one transition metal ion or a salt thereof. It has been found that such compositions are storage stable.

As per another embodiment, the said transition metal ion may be selected from group of copper, nickel, iron or a combination thereof.

In a preferred embodiment, the metal is copper.

In an embodiment, the hydrazine level in the composition may be maintained at below 1 ppm, preferably less than 28 ppb, more preferably less than 16.8 ppb, most preferably less than 4.6 ppb.

An embodiment of the present invention provides a composition comprising maleic hydrazide and transition metal ions selected from copper, iron and nickel or salts thereof, or a combination thereof.

In a preferred embodiment, the transition metal is copper.

According to an embodiment, the said transition metals or their ions may be introduced into the composition as metal salts. The types of salts include sulphates, sulphites, sulphides, chlorates, chlorites, chlorides, halides, nitrates, nitrites, carbonates, bicarbonates, persulphates, dichromates, bisulphates, permanganates, chromates, acetates, citrates, cyanides, hydroxides, oxides, phosphates, dichlorates, or combinations thereof.

As per one embodiment, the amount of transition metal ions in the liquid composition may range from 0.1 ppm to 1000 ppm, preferably from 0.1 ppm to 125 ppm, more preferably from 0.1 to 2 ppm.

As per one embodiment, the amount of transition metal ions in the solid composition may range from 0.1 ppm to 1000 ppm, preferably from 125 ppm to 1000 ppm. In an embodiment, the hydrazine level in the final product may be maintained at less than 1 ppm, preferably less than 28 ppb, more preferably 16.8 ppb, most preferably 4.6 ppb or less.

The final composition may stay storage stable within the mentioned specification of hydrazine level below 1 ppm, preferably below 28 ppb, more preferably 16.8 ppb, most preferably 4.6 ppb or less for a period upto 2 years.

According to another embodiment, the composition of the present invention may further comprise agriculturally acceptable excipients such as adjuvants, surfactants, colorants, thickeners, antifreeze agents, biocides, anti-foam agents, stabilizers, wetting agents or a mixture thereof maybe optionally added to the compositions of the present invention.

Thus, in an embodiment, surfactants may be selected from non-ionic, anionic or cationic surfactants.

Examples of nonionic surfactants include polyarylphenol polyethoxy ethers, polyalkylphenol polyethoxy ethers, polyglycol ether derivatives of saturated fatty acids, polyglycol ether derivatives of unsaturated fatty acids, polyglycol ether derivatives of aliphatic alcohols, polyglycol ether derivatives of cycloaliphatic alcohols, fatty acid esters of polyoxyethylene sorbitan, alkoxylated vegetable oils, alkoxylated acetylenic diols, polyalkoxylated alkylphenols, fatty acid alkoxylates, sorbitan alkoxylates, sorbitol esters, C8-C22 alkyl or alkenyl polyglycosides, polyalkoxy styrylaryl ethers, alkylamine oxides, block copolymer ethers, polyalkoxylated fatty glyceride, polyalkylene glycol ethers, linear aliphatic or aromatic polyesters, organo silicones, polyaryl phenols, sorbitol ester alkoxylates, polyalkylene oxide block copolymers, acrylic copolymers and mono- and diesters of ethylene glycol and mixtures thereof.

Examples of anionic surfactants include alcohol sulfates, alcohol ether sulfates, alkylaryl ether sulfates, alkylaryl sulfonates such as alkylbenzene sulfonates and alkylnaphthalene sulfonates and salts thereof, alkyl sulfonates, mono- or di-phosphate esters of polyalkoxylated alkyl alcohols or alkylphenols, mono- or di-sulfosuccinate esters of C12-C15 alkanols or polyalkoxylated C12-C15 alkanols, alcohol ether carboxylates, phenolic ether carboxylates, polybasic acid esters of ethoxylated polyoxyalkylene glycols consisting of oxybutylene or the residue of tetrahydrofuran, sulfoalkylamides and salts thereof such as N-methyl-N-oleoyltaurate Na salt, polyoxyalkylene alkylphenol carboxylates, polyoxyalkylene alcohol carboxylates alkyl polyglycoside/alkenyl succinic anhydride condensation products, alkyl ester sulfates, napthalene sulfonates, naphthalene formaldehyde condensates, alkyl sulfonamides, sulfonated aliphatic polyesters, sulfate esters of styrylphenyl alkoxylates, and sulfonate esters of styrylphenyl alkoxylates and their corresponding sodium, potassium, calcium, magnesium, zinc, ammonium, alkylammonium, diethanolammonium, or triethanolammonium salts, salts of ligninsulfonic acid such as the sodium, potassium, magnesium, calcium or ammonium salt, polyarylphenol polyalkoxyether sulfates and polyarylphenol polyalkoxyether phosphates, and sulfated alkyl phenol ethoxylates and phosphated alkyl phenol ethoxylates.

Cationic surfactants include alkanol amides of C8-C18 fatty acids and C8-C18 fatty amine polyalkoxylates, C10-C18 alkyldimethylbenzylammonium chlorides, coconut alkyldimethylaminoacetic acids, and phosphate esters of C8-18 fatty amine polyalkoxylates.

In an embodiment, colorants may be selected from iron oxide, titanium oxide and Prussian Blue, and organic dyestuffs, such as alizarin dyestuffs, azo dyestuffs or metal phthalocyanine dyestuffs, and trace elements, such as salts of iron, manganese, boron, copper, cobalt, molybdenum and zinc.

Another embodiment involves addition of a thickener or binder which may be selected from but not limited to molasses, granulated sugar, alginates, karaya gum, jaguar gum, tragacanth gum, polysaccharide gum, mucilage, xanthan gum or combination thereof. In another embodiment, the binder may be selected from silicates such as magnesium aluminium silicate, polyvinyl acetates, polyvinyl acetate copolymers, polyvinyl alcohols, polyvinyl alcohol copolymers, celluloses, including ethylcelluloses and methylcelluloses, hydroxymethyl celluloses, hydroxypropylcelluloses, hydroxymethylpropyl-celluloses, polyvinylpyrolidones, dextrins, malto-dextrins, polysaccharides, fats, oils, proteins, gum arabics, shellacs, vinylidene chloride, vinylidene chloride copolymers, calcium lignosulfonates, acrylic copolymers, starches, polyvinylacrylates, zeins, gelatin, carboxymethylcellulose, chitosan, polyethylene oxide, acrylimide polymers and copolymers, polyhydroxyethyl acrylate, methylacrylimide monomers, alginate, ethylcellulose, polychloroprene and syrups or mixtures thereof; polymers and copolymers of vinyl acetate, methyl cellulose, vinylidene chloride, acrylic, cellulose, polyvinylpyrrolidone and polysaccharide; polymers and copolymers of vinylidene chloride and vinyl acetate-ethylene copolymers; combinations of polyvinyl alcohol and sucrose; plasticizers such as glycerol, propylene glycol, polyglycols.

In another embodiment, antifreeze agent(s) added to the composition may be alcohols selected from the group comprising of but not limited to ethylene glycol, 1,2-propylene glycol, 1,3-propylene glycol, 1,2-butanediol, 1,3-butanediol, 1,4-butanediol, 1,4-pentanediol, 3-methyl-1,5-pentanediol, 2,3-dimethyl-2,3-butanediol, trimethylol propane, mannitol, sorbitol, glycerol, pentaerythritol, 1,4-cyclohexanedimethanol, xylenol, bisphenols such as bisphenol A or the like. In addition, ether alcohols such as diethylene glycol, triethylene glycol, tetraethylene glycol, polyoxyethylene or polyoxypropylene glycols of molecular weight up to about 4000, diethylene glycol monomethylether, diethylene glycol monoethylether, triethylene glycol monomethylether, butoxyethanol, butylene glycol monobutylether, dipentaerythritol, tripentaerythritol, tetrapentaerythritol, diglycerol, triglycerol, tetraglycerol, pentaglycerol, hexaglycerol, heptaglycerol, octaglycerol.

According to an embodiment, biocides may be selected from benzothiazoles, 1,2-benzisothiazolin-3-one, sodium dichloro-s-triazinetrione, sodium benzoate, potassium sorbate, 1,2-phenyl-isothiazolin-3-one, inter chloroxylenol paraoxybenzoate butyl.

According to an embodiment, antifoam agent may be selected from Polydimethoxysiloxane, polydimethylsiloxane, Alkyl poly acrylates, Castor Oil, Fatty Acids, Fatty Acids Esters, Fatty Acids Sulfate, Fatty Alcohol, Fatty Alcohol Esters, Fatty Alcohol Sulfate, Foot Olive Oil, Mono & Di Glyceride, Paraffin Oil, Paraffin Wax, Poly Propylene Glycol, Silicones Oil, Vegetable & Animal Fats, Vegetable & Animal Fats Sulfate, Vegetable & Animal Oil, Vegetable & Animal Oil Sulfate, Vegetable & Animal Wax, Vegetable & Animal Wax Sulfate.

According to one embodiment, the composition may be applied on target crops selected from tobacco, potato, onion, shallot, strawberries, raspberries, pome fruits, cranberries, blackberries, blueberries, gooseberries, tubers, carrot, citrus, beans, beet, corn, lima beans, peas, rutabagas, sugar beet, garlic, tomato, floriculture and horticulture.

In an embodiment, the potential uses of the composition may be as a plant growth inhibitor, plant growth regulator, plant growth promoter, defoliant, sprout inhibitor, seed treatment, flowering agent, fruiting agent, nutrient and fertilizer. The composition may be applied on the target crop by sprinkling, spraying, dusting, coating, hand deposition or as aerosols.

As per an embodiment, the application rates for a solid formulation fall in range of 2.5-5.0 product/ha (equivalent to 1.5-3.0 kg maleic hydrazide/ha) and for liquid formulation in the range of 11.0-17.5 L/ha (equivalent to 2.05-3.26 kg maleic hydrazide/ha).

Another embodiment of the present invention may entail the use of transition metal ions in controlling and maintaining the free hydrazine levels in a composition below 1 ppm, preferably below 28 ppb, more preferably below 16.8 ppb, most preferably 4.6 ppb. The use of transition metal ions makes the composition low in toxicity and imparts stability to compositions.

The transition metal ions to be used in the composition may be copper, iron, nickel, or a combination thereof; more preferably copper ions. The metal ions may be introduced into the composition as metal salts.

The dicarboxylic acid hydrazides may be selected from maleic hydrazide, citric hydrazide, oxalic hydrazide, succinic hydrazide, malonic hydrazide, adipic hydrazide, phthalic hydrazide, terephthalic hydrazide. Maleic hydrazide is preferred.

As per an embodiment, the composition of the present invention may be formulated a liquid or a solid composition. It may be formulated as a powder (DS), a water-slurryable powder (WS), a non-aqueous solution (LS), dry flowables (DF), liquid flowables (LF), true liquids (TL), emulsifiable concentrates (EC), dusts (D), wettable powders (WP), suspoemulsions (SE), soluble concentrate (SL), water soluble granules (SG), water-dispersible granules (WG) or a flowable suspension (FS).

In an embodiment, transition metal ions may be used to control hydrazine levels in dicarboxylic acid hydrazide technical, wherein the dicarboxylic acid hydrazide technical is substantially free of hydrazine. The hydrazine levels of the dicarboxylic acid hydrazide technical may be maintained at below 1 ppm, preferably below 28 ppb. The preferred dicarboxylic acid hydrazide technical is maleic hydrazide and the transition metal ion may be selected from copper, iron, nickel, or a combination thereof. Copper is the preferred transition metal ion.

In another embodiment, dicarboxylic acid hydrazide technical with hydrazine level less than 1 ppm, preferably less than 28 ppb may be used in preparing the composition comprising dicarboxylic acid hydrazide and at least one transition metal ion. In a preferred embodiment, maleic hydrazide with hydrazine level less than 1 ppm, preferably less than 28 ppb, may be used in a composition comprising maleic hydrazide and at least one transition metal ion. The transition metal ion may be selected from copper, iron, nickel, or a combination thereof. Copper is the preferred transition metal ion.

In an embodiment, the present invention may include a method of preparing a solid composition comprising:
A) dissolving transition metal salts in water to yield desired concentration of metal ions in solutions;
B) adding dicarboxylic acid hydrazide technical to the said solution to form a suspension;
C) mixing, filtering and drying the said suspension.

As per an embodiment, it may include a method of preparing a liquid composition comprising: combining water and transition metal ions; adding said water to the dicarboxylic acid hydrazides.

In an embodiment, soft water is used. As used herein, the term "soft water" refers to water with less than 17.1 mg/l or ppm or 1 grains/gal of calcium and/or magnesium ions or hard water which has been treated by a process, wherein the calcium and magnesium ions are removed or replaced by sodium ions. Hard water is characterized by presence of calcium and/or magnesium ions present in form of salts to the power of 17.1 mg/l or ppm and above or 1 grains/gal and above.

The process used to convert hard water to soft water may be by using precipitating water softeners (washing soda, borax), ion exchange involving sodium ions for softening process (Sodium ions in the ion exchange resin displaces calcium and magnesium ions present in water), addition of chelating agents like EDTA, subjecting to distillation process or reverse osmosis and/or adsorption filtration. Preferred method is ion exchange involving sodium ions for softening process.

As used herein, the term "maximum admissible level" refers to the maximum amount of metal ions that are permissible in drinking water. The specifications for maximum admissible level are provided in table 1.

**Table 1: Permissible amounts of metal ions added to drinking/softened water**

| Element | Specification (ppm) | |
|---|---|---|
| | Minimum | Maximum |
| Copper (Cu²⁺) | 1.5 | 2.0 |
| Calcium (Ca²⁺) | - | 1 |
| Magnesium (Mg²⁺) | - | 0.1 |
| Sodium (Na²⁺) | - | 200 |

The above mentioned process may have following advantages: degrade hydrazine in the final formulated product and the hydrazine levels may be controlled within the specified limit of 1 ppm, preferably below 28 ppb, more preferably below 16.8 ppb, most preferably 4.6 ppb; EDTA may not required to be used; crystallization of the product may not occur; provides stable composition with a significant shelf-life.

As per an embodiment, the composition is physico-chemically stable with free hydrazine level below 1 ppm, preferably below 28 ppb, more preferably 16.8 ppb, most preferably 4.6 ppb, for a period of upto 2 years.

The transition metal ions used in the above mentioned composition may be copper, iron, nickel; more preferably copper ions. The metal ions may be introduced into the composition as metal salts.

The dicarboxylic acid hydrazides may be selected from maleic hydrazide, citric hydrazide, oxalic hydrazide, succinic hydrazide, malonic hydrazide, adipic hydrazide, phthalic hydrazide, terephthalic hydrazide. Maleic hydrazide is preferred as per an embodiment.

An embodiment of the present invention may cover a method of preparation of liquid composition comprising: combining soft water and transition metal ions, wherein the transition metal ions are added upto a maximum admissible level; adding the said combination to the maleic hydrazide.

As per an embodiment, transition metal ions used in the composition may be copper, iron, nickel; more preferably copper ions. The transition metal ions may be introduced into the composition as metal salts. The amount of copper ions added to the composition may range from 1.5 ppm to 2.0 ppm.

The above-mentioned composition may contain hydrazine level below 1 ppm, preferably below 28 ppb, more preferably 16.8 ppb, most preferably 4.6 ppb, and may be storage stable upto 2 years.

In a further embodiment, the present invention provides a method of treating a plant at a locus by applying a low toxic composition comprising: at least one compound selected from a dicarboxylic acid hydrazide, and at least one transition metal ion.

The above-mentioned composition may contain hydrazine level below 1 ppm, preferably below 28 ppb, more preferably 16.8 ppb, most preferably 4.6 ppb, and may be storage stable upto 2 years.

The said transition metal ion may be copper, iron, nickel, or a combination thereof; more preferably copper ions. The metal ion may be introduced as metal salts.

The dicarboxylic acid hydrazides may be selected from maleic hydrazide, citric hydrazide, oxalic hydrazide, succinic hydrazide, malonic hydrazide, adipic hydrazide, phthalic hydrazide, terephthalic hydrazide, Maleic hydrazide is preferred.

As per an embodiment, the composition of the present invention may be formulated a liquid or a solid composition. It may be formulated as a powder (DS), a water-slurryable powder (WS), a non-aqueous solution (LS), dry flowables (DF), liquid flowables (LF), true liquids (TL), emulsifiable concentrates (EC), dusts (D), wettable powders (WP), suspoemulsions (SE), soluble concentrate (SL), water soluble granules (SG), water-dispersible granules (WG) or a flowable suspension (FS).

The plant treated may be selected from tobacco, potato, onion, strawberries, raspberries, pome fruits, cranberries, blackberries, blueberries, gooseberries, tubers, carrot, citrus, beans, beet, corn, lima beans, peas, rutabagas, shallot, sugar beet, garlic, tomato, floriculture and horticulture. The composition may be used in seed treatment, wherein the composition may be applied to a plant propagation material.

As used herein, the term "plant propagation material" encompasses any tissue of plant origin which is used in vegetative propagation or growing a plant, a plantlet or any part of a plant. This includes seeds, grains, hulls, seed-coats, roots, shoots, tubers, rhizomes, bulbs, corms, anthers, stamen, pollen, stigma, fruits, flowers, buds, bark, stems, leaflets, tendrils, pods, etc.

The treatment of the above-mentioned plant may be achieved by application of the said composition pre-emergence or post-emergence.

In addition to already mentioned benefits of the composition of the present invention, the use of transition metal ions provides benefit of making the composition less phytotoxic to the plant which it is applied, less hazardous to the consumer in direct exposure to the product and indirectly less harmful for the end user of the plant to which it is applied. It also extends its advantage of being less toxic to the adjacent flora and fauna, thus not endangering the neighbouring species and beneficial animals to the potent toxin.

In another embodiment, the composition of the present invention is effective against pests in the above mentioned crops such as sucking pests.

In another embodiment, the composition of the present invention is an effective anti-sprouting agent.

In yet another embodiment, the composition of the present invention is an effective growth regulator providing increased yield and vigor.

In an embodiment, a composition according to the present invention may be a solid composition.

In an embodiment, the amount of a metal ion in the compositions of the present invention may be less than, or about, 1 ppm.

In an embodiment, the amount of a metal ion in the compositions of the present invention may be less than, or about, 2 ppm.

In an embodiment, the amount of a metal ion in the compositions of the present invention may be less than, or about, 125 ppm.

In an embodiment, the compositions of the present invention are in the form of maleic hydrazide 600 SG, maleic hydrazide 186.5 SL, or maleic hydrazide 270 SL.

In an embodiment, the present invention provides maleic hydrazide technical material having less than 28 ppb of hydrazine as the contaminant.

An embodiment of the present invention is maleic hydrazide 600 SG formulation having less than 16.8 ppb hydrazine.

Another embodiment of the present invention is maleic hydrazide 186.5 SL or 270 SL having less than 4.6 ppb hydrazine. In an embodiment, the composition of the invention comprises about 0.05% w/w of copper(II) sulphate pentahydrate.

In an embodiment, the copper or its salts may be added to the water used for preparing the composition instead of being added externally into the composition.

In an embodiment, water used for the preparation of the composition comprises about 2 ppm copper.

In an embodiment, the solid compositions comprise copper between 125 ppm to about 1000 ppm of copper or its salts.

In an embodiment, the solid composition of the present invention may be administered to the desired locus in the ranges of 2.5-5.0 kg product/ha (equivalent to 1.5-3.0 kg maleic hydrazide/ha).

In this embodiment, the composition comprises about 80.4% w/w of maleic hydrazide potassium salt equivalent to 60% pure maleic hydrazide.

In an embodiment, the liquid composition of the present invention may be administered to the desired locus in the range of 11.0-17.5 L/ha (equivalent to 2.05-3.26 kg maleic hydrazide/ha).

In an embodiment, the process for preparing the composition of the present invention comprises neutralizing maleic hydrazide with an alkali metal hydroxide.

In an embodiment, the alkali metal hydroxide is potassium hydroxide.

The instant invention is more specifically explained by examples given above. However, it should be understood that the scope of the present invention is not limited by the examples in any manner. It will be appreciated by any person skilled in this art that the present invention includes the given examples and further can be modified and altered without departing from the novel teachings and advantages of the invention which are intended to be included within the scope of the invention.

### Example 1:

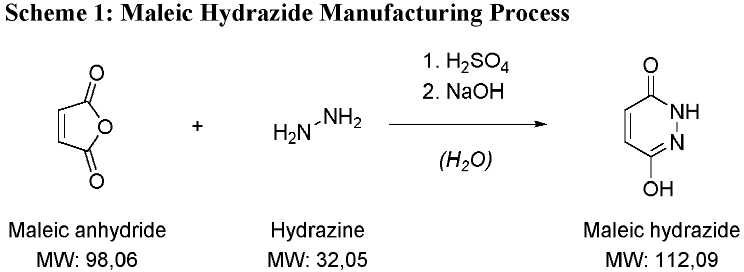

Dissolve Copper Sulfate in 100mL of water to yield desired concentration of Cu (II) ions in solutions. To this add 10g of Maleic Hydrazide Technical to form a suspension. Mix for 10 minutes at room temperature. Filter under vacuum for 5 minutes. Dry at 60 °C for 24 hours.

The hydrazine content in the maleic hydrazide technical thus obtained was analysed for various levels of copper present in the washing water.

### Results

| % Copper | Hydrazine Content (ppb) | Comments |
|---|---|---|
| Untreated | 24.5 | Starting Hydrazine level |
| Blank | 9.8 | 100mL of water, not copper |
| 0.0002% | 10.4 | |
| 0.001% | 4.5 | |
| 0.01% | 3.1 | |
| 0.1% | 3.0 | |
| 0.5% | 2.9 | |
| 1% | 2.7 | |
| 10% | < LOQ | |

It was thus found that washing the MH with water was an effective method of reducing hydrazine, going from a level of 24.5 ppb to ∼10 ppb. It was further found that upon increasing the water washing step, a substantial reduction in the level of hydrazine going from 10 ppb to ∼5 ppm was observed.

Therefore, in an embodiment, the present invention provides a process for preparing maleic hydrazide, said process comprising:
(a) mixing maleic anhydride, hydrazine and sulfuric acid in water; and
(b) adding copper sulfate to the resulting suspension.

In an embodiment, the present invention provides a process for preparing maleic hydrazide, said process comprising:
(a) mixing maleic anhydride, hydrazine and sulfuric acid in water at an elevated temperature;
(b) adding a base to adjust the pH; and
(c) adding copper sulfate to the resulting suspension.

In an embodiment, the present invention provides a process for preparing maleic hydrazide, said process comprising:
(a) mixing maleic anhydride, hydrazine and sulfuric acid in water at an elevated temperature;
(b) adding a base to adjust the pH;
(c) adding copper sulfate to the resulting suspension;
(d) agitating the suspension at ambient temperature for 30 minutes;
(e) centrifuging the suspension to remove water; and
(f) drying at elevated temperature.

Several experimental trial runs of this process were carried out, and observations were noted as hereunder:

| | **Trial 1** | **Trial 2** | **Trial 3** | **Trial 4** | **Trial 5** | **Trial 6** | **Trial 7** | **Trial 8** | **Trial 9** | **Trial 10** |
|---|---|---|---|---|---|---|---|---|---|---|
| Max Reaction Temp | 90 | 90 | 93 | 91 | 100 | 95 | 92 | 97 | 95 | 96 |
| Liquid KOH | No | No | No | Yes | No | Yes | Yes | Yes | Yes | No |
| Air Purge | Yes | Yes | Yes | Yes | Yes | Yes | Yes | Yes | Yes | Yes |
| CuSO4 | No | No | No | No | Yes (1000 ppm) | Yes (1000 ppm) | Yes (1000 ppm) | Yes (250pp m) | Yes (125p pm) | Yes (250p pm) |
| Reaction Time | 30 min | 30 min | 30 min | 30 min | 30 min | 30 min | 30 min | 30 min | 30 min | |
| KOH Solid Addition | 100% | 100% | 100% | 50% | 100% | 80% | 50% | 80% | 80% | 100% |
| 50% KOH Liquid Addition | 0% | 0% | 0% | 50% | 0% | 20% | 50% | 20% | 20% | 0% |
| KOH Addition | 20 min | 20 min | 20 min | * 20 min | 20 min | * 20 min | * 20 min | * 20 min | * 20 min | |
| Drying Time | 60 min | 60 min | 60 min | 60 min | 60 min | 60 min | 60 min | 60 min | 60 min | 60 min |
| Drying Temp | 110 deg | 110 deg | 110 deg | 110 deg | 110 deg | 110 deg | 110 deg | 110 deg | 110 deg | 110 deg |
| Drying LOD | <1.0 % | <1.0 % | <1.0 % | <1.0 % | <1.0 % | <1.0 % | <1.0 % | <1.0% | <1.0 % | <1.0 % |
| Notes | Stand ard | Stand ard | | | CuSO 4 (1000 ppm) added to intial water charge | 80:20 Liquid KOH + CuSO 4 (1000 ppm) | 50:50 Liquid KOH + CuSO 4 (1000 ppm) | 80:20 Liquid KOH + CuSO4 (250 ppm) | 80:20 Liquid KOH + CuSO 4 (125 **ppm**) | |

| Parameter | **Trial 1** | **Trial 2** | **Trial 3** | **Trial 4** | **Trial 5** | | **Trial 6** | **Trial 7** | **Trial 8** | **Trial 9** |
|---|---|---|---|---|---|---|---|---|---|---|
| Liquid KOH | No | No | No | Yes | No | | Yes | Yes | Yes | Yes |
| Air Purge | Yes | Yes | Yes | Yes | Yes | | Yes | Yes | Yes | Yes |
| CuSO4 | No | No | No | No | Yes (1000ppm) | | Yes (1000 ppm) | Yes (1000 ppm) | Yes (250p pm) | Yes (125p pm) |
| Hydrazine Finished Granule | 147 | 101 | 101 | 310 | <5.9 | | ND | ND | <5.9 | <5.9 |

It was thus found that regulating the pH of the suspension and adding copper salts resulted in surprisingly reduced hydrazine content to pass the regulatory threshold. Thus, a rework procedure for maleic hyrazide technical was established:
After the addition of deionized water (6233 g) to the wet product, sodium hydroxide solution is added at 60°C until a clear, yellowish solution is obtained. The typical amount of sodium hydroxide solution for complete dissolution (24%, 2020 g, 12.12 mol) results in a pH of 7.0 - 8.0 (at 60°C). Subsequently, sulfuric acid (96%, 668 g, 6.54 mol) is charged until the pH reaches the range of 2.0 - 2.5 (at 60°C). The suspension is cooled to room temperature and the product filtered. A two fold replacement wash with deionized water (1558 g each) is performed and the wet product is dried to obtain a crystalline solid.

The maleic hydrazide thus produced was used to prepare the compositions of the invention and compared with the comparative compositions without the copper salts.

| | | Trial 1 / ST 4602 / G1808ad 'Standard Fazor' | | | | | Trial 9 / ST 4603 / G1808ae 'Fazor with 125ppm Copper' | | | | |
|---|---|---|---|---|---|---|---|---|---|---|---|
| Test | GRL-13202 GLP Results (Specification) | Initial | 2W5 4 | 0150 | 0240 | 0325 | Initial | 2W5 4 | 0150 | 0240 | 0325 |
| Colour and Appearance | Beige free flowing granule | Beige free flowing granule | Beige free flowing granule | Beige free flowing granule | Beige free flowing gra ule | NT | Beige free flowing granule | Beige free flowing granule | Beige free flowing granule | Beige free flowing granule | NT |
| Water content | (< 1 %) | 0.21% | 0.28 % | 0.22 % | 0.29 % | NT | 0.64 % | 0.61 % | 0.54 % | 1.04 % | NT |
| pH (2% solution) | 9.6 (8-11.5) | 10.4 | 10.1 | 9.6 | 9.6 / 9.3 (1%) | NT | 7.7 | 7.4 | 7.5 | 7.6 / 7.4 (1%) | NT |
| Persistent Foam | 19-24 ml (< 35 ml) | 25 | 30 | 13 | 12 | NT | 5 | 5 | 13 | 3 | NT |
| (ml after 1 min) | | | | | | | | | | | |
| Hydrazine (ppb) | <16.8ppb | 182.32 | 205.9 | 220 | 224.6 | 220.4 | <1 | <1 | 13.5 | 7.85 | 11.8 |

It was found that compositions of the invention exhibited a favourable neutral pH, substantially lower persistent foam, and hydrazine content.

### Example 2:

Several comparative compositions with other hydrazine regulating agents were prepared, and analysed for the hydrazine content.

| **Sample Name** | **Storage** | **Composition** | **Hydrazine content (ppb, w/w AI)** |
|---|---|---|---|
| Maleic hydrazide 270SL | RT | reference | 3,2 |
| | 2W54°C | | 144,4 |
| Maleic hydrazide 270SL | 25°C | 2ppm Cu2+ | Not detected |
| | 2W54°C | | Not detected |
| Maleic hydrazide 270SL | 25°C | 1000ppm **NaOCl** | 72,6 |
| | 2W54°C | | 247,4 |
| Maleic hydrazide 270SL | 25°C | 1000ppm **H2O2** | 184,3 |
| | 2W54°C | | 65,1 |
| Maleic hydrazide 270SL | 25°C | 1000ppm **a-ketoglutaric acid** | Not detected |
| | 2W54°C | | 83,3 |
| Maleic hydrazide 270SL | 25°C | 1000ppm maleic anhydride | Not detected |
| | 2W54°C | | 119,6 |
| Maleic hydrazide 186.5SL | 25°C | reference | Not detected |
| | 2W54°C | | 153,6 |

Thus, it was concluded that copper salts, additionally in the presence of an alkali metal hydroxide, apart from reducing the hydrazine content of the resulting end formulations, also substantially improved the physico-chemical properties of the resulting solid or liquid formulations.

### Example 3:

Storage stability was demonstrated by testing hydrazine levels generated over time period ranging for a period upto 12 months. The samples were stored at temperatures of -10°C, 0°C, 25°C, 40°C, 50°C and 54°C. The tests were carried out in two geographically different locations.

### Formulation: Maleic hydrazide 270 SL comprising 125 ppb copper

The formulation remained a homogenous limpid liquid in appearance after 1 month at 4°C, after 2 months at 10°C and would become homogenous after the frozen samples were thawed.

| Interval | Initial | 2 weeks | | 1 month | | 2 months | | | 3 months | | | 6 months | | |
|---|---|---|---|---|---|---|---|---|---|---|---|---|---|---|
| Temp(°C) | N/A | -10 | 54 | 40 | 50 | -10 | 40 | 50 | 0 | 25 | 40 | 0 | 25 | 40 |
| Assay (%w/w) | 22.95 | | 23.04 | | | | 22.95 | | 22.98 | 22.93 | 23.00 | | | |
| Phase separation (%) | 0.0 | 0.0 | 0.0 | 0.0 | 0.0 | 0.0 | 0.0 | 0.0 | 0.0 | 0.0 | 0.0 | 0.0 | 0.0 | 0.0 |
| Sediment (Y/N) | N | N | N | N | N | N | N | N | N | N | N | N | N | N |
| pH neat | 9.0 | 8.8 | 8.9 | 9.2 | 9.1 | 9.0 | 9.0 | 9.0 | 9.0 | 9.0 | 9.0 | 9.1 | 9.1 | 9.0 |
| Hydrazine content specification | <6.3 | <6.3 | <6.3 | <6.3 | <6.3 | <6.3 | <6.3 | <6.3 | <6.3 | <6.3 | <6.3 | <6.3 | <6.3 | <6.3 |
| Hydrazine content Location #1 (ppb in Formulated product) | 2.50 | | 7.56 | | 5.20 | | 2.08 | 3.47 | | 2.94 | 3.56 | | | |
| Hydrazine content Location #2 (ppb in Formulated product) | <3,1 (LOQ) | | <3,1 (LOQ) | | | | <LOD (0,035) | <LOD (0,035) | | <3,1 (LOQ) | <3,1 (LOQ) | | | |

### Formulation: Maleic hydrazide 186.5 SL comprising 100 ppb copper (Location #1)

The particles in the formulation remained in suspension throughout the storage period and no change was noted.

| Interval | Initial | 2 weeks | | 1 month | | 2 months | | | 3 months | | | 6 months | | | 12 months | |
|---|---|---|---|---|---|---|---|---|---|---|---|---|---|---|---|---|
| Temp(°C) | N/A | - 10 | 54 | 40 | 50 | - 10 | 40 | 50 | 0 | 25 | 40 | 0 | 25 | 40 | 0 | 25 |
| Assay (%w/w) | 16.5 | | 16.5 | | | | 16.5 | | | 16.5 | 16.5 | | | | | |
| Sediment (Y/N) | N | Y | Y | Y | Y | Y | Y | Y | Y | Y | Y | Y | Y | Y | Y | Y |
| pH 1% | 9.2 | 9.2 | 9.2 | 9.2 | 9.2 | 9.1 | 9.2 | 9.0 | 9.0 | 9.1 | 9.1 | 9.2 | 9.0 | 9.0 | 9.1 | 9.1 |
| Hydrazine content Specification | <4.6 | <4.6 | <4.6 | <4.6 | <4.6 | <4.6 | <4.6 | <4.6 | <4.6 | <4.6 | <4.6 | <4.6 | <4.6 | <4.6 | <4.6 | <4.6 |
| Hydrazine content Location #1 (ppb in Formulated product) | <1.0 | 4.0 | 4.0 | <LOQ (3,1) | Not detected | Not detected | 1.3 | 3.2 | Not detected | Not detected | 1.6 | Not detected | 3.2 | 3.3 | <LOQ (3. 1) | <LOQ (3. 1) |

### Formulation: Maleic hydrazide 186.5 SL comprising 100 ppb copper (Location #2)

The particles in the formulation remained in suspension throughout the storage period and no change was noted.

| Interval | Initial | 2 weeks | | 1 month | | 2 months | | | 3 months | | | 6 months | | | 12 months | |
|---|---|---|---|---|---|---|---|---|---|---|---|---|---|---|---|---|
| Temp(°C) | N/A | -10 | 54 | 40 | 50 | -10 | 40 | 50 | 0 | 25 | 40 | 0 | 25 | 40 | 0 | 25 |
| Assay (%w/w) | 16.61 | | 16.77 | | | | 16.63 | | | 16.8 | 16.8 | | | | | |
| Sediment (Y/N) | Y | Y | Y | Y | Y | Y | Y | Y | Y | Y | Y | Y | Y | Y | Y | Y |
| pH neat | 8.8 | 8.8 | 9.0 | 8.8 | 8.8 | 8.8 | 8.8 | 8.7 | 8.7 | 8.8 | 8.8 | 8.8 | 8.7 | 8.8 | 8.8 | 8.8 |
| Hydrazine content Specification | <4.6 | <4.6 | <4.6 | <4.6 | <4.6 | <4.6 | <4.6 | <4.6 | <4.6 | <4.6 | <4.6 | <4.6 | <4.6 | <4.6 | <4.6 | <4.6 |
| Hydrazine content Location #2 (ppb in Formulated product) | Not detected | Not detected | Not detected | < LOQ (3,1) | Not detected | Not detected | <LOQ (3,1) | <LOQ (3,1) | Not detected | Not detected | Not detected | Not detected | 3.2 | 3.3 | <LOQ (3.1) | <LOQ (3.1) |

### Example 4:

The compositions of the present invention were applied on different crops to check their efficacy. The compositions were intended to be used as anti-sprout agent, growth regulator and for pest control.

### Anti-sprouting activity

The two formulations 270 SL and 60 SG were applied to potatoes and sprouting efficacy was recorded at 121, 152, 181, 211 and 241 days after application. 270 SL was applied in different rates and as two different formulations.

| Days After First/Last Application. | | | | 121 | 152 | 181 | 211 | 241 |
|---|---|---|---|---|---|---|---|---|
| Treatment No. | Treatment Name | Rate of Application | Rate Unit | No. of sprouts | No. of sprouts | No. of sprouts | No. of sprouts | No. of sprouts |
| 1 | Untreated check | | | 3.5 | 22.5 | 20.3 | 19.3 | 23 |
| 2 | Formulation 270 SL #1 | 7.77 | l/ha | 1 | 19 | 17.5 | 13.8 | 16 |
| 3 | Formulation 270 SL #1 | 11.1 | l/ha | 0.5 | 16 | 14 | 9.5 | 12.5 |
| 4 | Formulation 270 SL #1 | 22.2 | l/ha | 0 | 15.5 | 8.5 | 4.3 | 6 |
| 5 | Formulation 270 SL #2 | 7.77 | l/ha | 2 | 18 | 16.5 | 10.5 | 14 |
| 6 | Formulation 270 SL #2 | 11.1 | l/ha | 0.8 | 14 | 10.8 | 7 | 9 |
| 7 | Formulation 270 SL #2 | 22.2 | l/ha | 0 | 11.3 | 7 | 2 | 3.3 |
| 8 | Formulation 60 SG | 5 | kg/ha | 0.5 | 15.3 | 13 | 8.3 | 10.8 |
| 9 | Formulation 60 SG | 10 | kg/ha | 0.3 | 11.8 | 7.5 | 3 | 5.5 |

The two formulations 270 SL and 60 SG were applied to onions and sprouting efficacy was recorded at 93, 122, 184 days after application. 270 SL was applied in different rates and as two different formulations. The experiment was carried out for two batches of onions.

| Days After First/Last Application | | | | 93 (Lot 1) | 93 (Lot 2) | 122 (Lot 1) | 122 (Lot 2) | 184 (Lot 1) | 184 (Lot 2) |
|---|---|---|---|---|---|---|---|---|---|
| Treatment No. | Treatment Name | Rate of Application | Rate Unit | No. of sprouts | No. of sprouts | No. of sprouts | No. of sprouts | No. of sprouts | No. of sprouts |
| 1 | Untreated check | | | 12.8 | 4.5 | 23.3 | 4.8 | 4.8 | 10.8 |
| 2 | Formulation 270 SL #1 | 6.23 | l/ha | 7.8 | 1 | 17.8 | 3.3 | 1 | 5.8 |
| 3 | Formulation 270 SL #1 | 8.9 | l/ha | 5.8 | 1 | 15.3 | 2.5 | 2.3 | 6.3 |
| 4 | Formulation 270 SL #1 | 17.8 | l/ha | 4.5 | 0.5 | 10.8 | 1 | 1.8 | 2.8 |
| 5 | Formulation 270 SL #2 | 6.23 | l/ha | 6 | 1.3 | 17.3 | 4 | 2.8 | 3.5 |
| 6 | Formulation 270 SL #2 | 8.9 | l/ha | 4.3 | 0.3 | 11.8 | 2.3 | 2.3 | 5 |
| 7 | Formulation 270 SL #2 | 17.8 | l/ha | 2.3 | 1 | 5 | 0.3 | 1.5 | 1 |
| 8 | Formulation 60 SG | 4 | kg/ha | 5.8 | 1.3 | 13.5 | 1.8 | 3 | 6.8 |
| 9 | Formulation 60 SG | 8 | kg/ha | 2 | 0.8 | 8 | 0.5 | 2.3 | 3.5 |

The two formulations 270 SL and 60 SG were applied to garlic and sprouting efficacy was recorded at 60, 93, 122, 151 and 184 days after application. 270 SL was applied in different rates and as two different formulations.

| Days After First/Last Application | | | | 60 | 93 | 122 | 151 | 184 |
|---|---|---|---|---|---|---|---|---|
| Treatment No. | Treatment Name | Rate of Application | Rate Unit | No. of sprouts | No. of sprouts | No. of sprouts | No. of sprouts | No. of sprouts |
| 1 | Untreated check | | | 2.3 | 12.8 | 23.3 | 32.5 | 55.8 |
| 2 | Formulation 270 SL #1 | 6.23 | l/ha | 1.3 | 7.8 | 17.8 | 27.8 | 43.8 |
| 3 | Formulation 270 SL #1 | 8.9 | l/ha | 1.3 | 5.8 | 15.3 | 24.5 | 37 |
| 4 | Formulation 270 SL #1 | 17.8 | l/ha | 0.5 | 4.5 | 10.8 | 17.8 | 29.8 |
| 5 | Formulation 270 SL #2 | 6.23 | l/ha | 1.5 | 6 | 17.3 | 28 | 43 |
| 6 | Formulation 270 SL #2 | 8.9 | l/ha | 1 | 4.3 | 11.8 | 23.5 | 36.5 |
| 7 | Formulation 270 SL #2 | 17.8 | l/ha | 0.5 | 2.3 | 5 | 12.3 | 27.5 |
| 8 | Formulation 60 SG | 4 | kg/ha | 0.8 | 5.8 | 13.5 | 24.3 | 38.3 |
| 9 | Formulation 60 SG | 8 | kg/ha | 0.3 | 2 | 8 | 14.3 | 28.5 |

### Growth-regulator

The two formulations 270 SL and 60 SG were applied to potatoes and onions as growth regulator and the number of bulbs were counted at the end of 181 days and 152 days after application, respectively.

| Crop | | Potato | | | Onion | | |
|---|---|---|---|---|---|---|---|
| Days After First/Last Application | | | | 181 | | | 152 |
| Treatmen t No. | Treatment Name | Rate of Application | Rate Unit | No. of bulbs | Rate of Application | Rate Unit | No. of bulbs |
| 1 | Untreated Check | | | 7 | | | 5.5 |
| 2 | Formulation 270 SL #1 | 7.77 | l/ha | 12 | 6.23 | 1/ha | 2 |
| 3 | Formulation 270 SL #1 | 11.1 | l/ha | 18.5 | 8.9 | 1/ha | 4.3 |
| 4 | Formulation 270 SL #2 | 7.77 | l/ha | 14 | 6.23 | 1/ha | 2.8 |
| 5 | Formulation 270 SL #2 | 11.1 | l/ha | 22.5 | 8.9 | 1/ha | 4 |
| 6 | Formulation 60 SG | 10 | kg/ha | 28.8 | 4 | kg/ha | 4.3 |

### Pest control:

270 SL formulation was applied to tobacco as two variants and in two different rates. The effect was checked on reduction in number of sucking pests and yield.

| Treatment No. | Treatment | Application rate | Rate Unit | No. of sucker pests in tobacco | Yield |
|---|---|---|---|---|---|
| 1 | untreated check | | | 103 | 0.1 |
| 3 | Formulation 270 SL #1 | 10 | l/ha | 20 | 1.7 |
| 4 | Formulation 270 SL #1 | 20 | l/ha | 14 | 1.4 |
| 6 | Formulation 270 SL #2 | 10 | l/ha | 15.5 | 1.5 |
| 7 | Formulation 270 SL #2 | 20 | l/ha | 11.8 | 1.7 |
| 8 | Formulation 80 SG | 4.5 | kg/ha | 28.3 | 2.5 |

It was further found that the introduction of a transition metal ion or a salt thereof led to a substantial improvement in the sprout inhibiting activity of maleic hydrazide. This was corroborated by several field experiments, wherein the efficacy of maleic hydrazide on sucker suppression in tobacco, and on sprout inhibition in potato, onion, garlic was found to depend on the presence or absence of the transition metal ion or salt thereof. It was surprisingly found that in the presence of a transition metal ion or a salt thereof, the efficacy of maleic hydrazide sucker suppression in tobacco, and on sprout inhibition in potato, onion, garlic was substantially higher than the efficacy in the absence of the transition metal ion or salt thereof. The presence of a transition metal ion or a salt thereof was found to be the origin of an enhanced efficacy of maleic hydrazide towards sucker suppression in tobacco, and on sprout inhibition in potato, onion, garlic, which was considered to be surprising.

## Claims

1. A low toxicity composition comprising:
a. at least one compound selected from dicarboxylic acid hydrazide; and
b. at least one transition metal ion or a salt thereof.

2. The composition as claimed in claim 1, wherein the composition is substantially free of hydrazine; optionally wherein the hydrazine levels in the said formulation are less than or equal to 1 ppm.

3. The composition as claimed in claim 1 or claim 2, wherein the said transition metal ion is at least one selected from copper, iron, zinc, cobalt, nickel, silver, vanadium, chromium, manganese, mercury, scandium, titanium, tungsten, cadmium, platinum, rhodium, palladium, molybdenum, osmium, ruthenium, zirconium and gold; optionally wherein the said transition metal ion is selected from copper, nickel, manganese, iron, zinc, or a combination thereof; further optionally wherein the said transition metal ion is copper.

4. The composition as claimed in claim 3, wherein the said transition metal ion is incorporated in the composition as metal salt or in elemental form.

5. The composition as claimed in any preceding claim, wherein the said dicarboxylic acid hydrazide is at least one selected from maleic hydrazide, citric hydrazide, oxalic hydrazide, succinic hydrazide, malonic hydrazide, adipic hydrazide, phthalic hydrazide, and terephthalic hydrazide, optionally maleic hydrazide.

6. The composition as claimed in claim 1 or claim 2, wherein the said dicarboxylic acid hydrazide is maleic hydrazide and the said transition metal ion is selected from copper, nickel, iron, or a combination thereof.

7. The composition as claimed in any preceding claim, wherein the said composition is a solid or liquid composition selected from a powder, a water-slurryable powder, a non-aqueous solution, a dry flowable, a liquid flowable, a true liquid, an emulsifiable concentrate, a dust, a wettable powder, a suspoemulsion, a soluble concentrate, a water soluble granule, a water-dispersible granule or a flowable suspension.

8. Use of transition metal ions for controlling or lowering hydrazine levels in composition comprising at least one compound selected from dicarboxylic acid hydrazide.

9. The use as claimed in claim 8, wherein the transition metal ions regulate the hydrazine levels in the said composition below or equal to 1 ppm.

10. The use as claimed in claim 8 or claim 9, wherein the said dicarboxylic acid hydrazide is maleic hydrazide and said transition metal ion is selected from copper, nickel, iron, or a combination thereof.

11. A method of preparing a low toxicity composition which comprises:
a. dissolving transition metal salts in water to yield desired concentration of metal ions in solutions;
b. adding dicarboxylic acid hydrazide technical to the said solution to form a suspension;
c. mixing, filtering and drying the said suspension.

12. The method as claimed in claim 11, wherein a method of preparing a liquid composition comprises: combining water and transition metal ions; adding said water to the dicarboxylic acid hydrazide.

13. A method of treating a plant, a seed and/or a plant propagation material at a locus by applying a low toxicity composition of any of claims 1 to 7.

14. The method as claimed in claim 13, wherein the application is a seed treatment, pre-emergent or a post-emergent application.

15. The composition of any of claims 1 to 7, the use of any of claims 8 to 10 or the method of any of claims 11 to 14, wherein the amount of transition metal ion is less than, or about, 1000 ppm; optionally
less than, or about, 125 ppm; further optionally
less than, or about, 2 ppm; and yet further optionally
less than, or about, 1 ppm; and/or
wherein the composition additionally comprises at least one agrochemically acceptable excipient; and/or
wherein the said composition is an anti-sprout agent, a growth regulator and/or pest control agent.
